# EUROPÄISCHE PATENTANMELDUNG

(11) **EP 3 543 270 A1**
(43) Veröffentlichungstag der Anmeldung: **25.09.2019**
(21) Anmeldenummer: 18163621.8
(22) Anmeldetag: 23.03.2018
(51) Int. Cl.: C08G 18/62, B01J 31/00, C08G 18/70, C08G 18/75, C08G 18/79, C08G 18/02, C08G 18/08, C08G 18/20, C08G 18/24, C08G 18/28, C09D 175/04, C08G 18/32, C08G 18/42

(54) **KATALYSATORSYSTEM FÜR URETDIONDISPERSIONEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Katalysatorsystem, umfassend
A) mindestens eine Verbindung ausgewählt aus Azolen, Oxazolen, Thiazolen, Benzotriazol, Benzimidazol, Benzoxazol und deren Salzen;
B) mindestens einen Säurefänger, der mindestens eine Epoxygruppe enthält; und
C) mindestens einen, eine N,N,N'-trisubstituierte Amidinstruktur enthaltenden, Katalysator mit einem Amidingruppengehalt von 12,0 bis 47,0 Gew.-%, berechnet als CN2 mit Molekulargewicht = 40. Ein Kit, welches das Katalysatorsystem der vorliegenden Erfindung und eine wässrige Uretdiondispersion, die eine Säurezahl von 1 bis 100 mg KOH/g und zudem mindestens eine Carboxylgruppe aufweist, umfasst. Ein Verfahren zur Herstellung einer Polyurethanschicht mit dem Katalysatorsystem der vorliegenden Erfindung und dieser Uretdiondispersion und die dabei erhaltene Polyurethanschicht, sowie die Verwendung des Katalysatorsystems zum Aushärten von wässrigen sauren Uretdiondispersionen und/oder zur Herstellung von Lacken oder Beschichtungen.

## Beschreibung

Die vorliegende Erfindung betrifft ein Katalysatorsystem, umfassend
A) mindestens eine Verbindung ausgewählt aus Azolen, Oxazolen, Thiazolen, Benzotriazol, Benzimidazol, Benzoxazol und deren Salzen;
B) mindestens einen Säurefänger, der mindestens eine Epoxygruppe enthält; und
C) mindestens einen, eine N,N,N'-trisubstituierte Amidinstruktur enthaltenden, Katalysator mit einem Amidingruppengehalt von 12,0 bis 47,0 Gew.-%, berechnet als CN2 mit Molekulargewicht = 40. Ferner betrifft die vorliegende Erfindung ein Kit, welches das Katalysatorsystem der vorliegenden Erfindung und eine wässrige Uretdiondispersion, die eine Säurezahl von 1 bis 100 mg KOH/g und zudem mindestens eine Carboxylgruppe aufweist, umfasst, ein Verfahren zur Herstellung einer Polyurethanschicht mit dem Katalysatorsystem der vorliegenden Erfindung und dieser Uretdiondispersion und die dabei erhaltene Polyurethanschicht, sowie die Verwendung des Katalysatorsystems zum Aushärten von wässrigen sauren Uretdiondispersionen und/oder zur Herstellung von Lacken oder Beschichtungen.

Die Herstellung von Polyurethanschichten ausgehend von Uretdiondispersionen ist bekannt. Diese erfolgt hauptsächlich durch die Verwendung von Uretdiongruppen-haltigen Pulverlackzusammensetzungen.

In der EP 0 803 524 A1 werden Amidine als Katalysatoren in Uretdiongruppen-haltigen PUR-Pulverlackzusammensetzungen beschrieben. Die Uretdionkomponente und die OH-haltige Bindemittelkomponente sind bei Raumtemperatur fest. Diese werden auf das Substrat durch elektrostatisches Pulversprühen oder Wirbelsintern aufgetragen, wobei die Aushärtetemperaturen über 130 °C betragen. Deren Anwendung als wässrige Systeme ist nicht möglich.

Auch in der EP1526146 A1 wird eine Polyurethanpulverlackzusammensetzung beschrieben. Diesbezüglich wird offenbart, dass die Aktivität der Amidin-Katalysatoren in Anwesenheit von Säuren deutlich abnimmt. Es werden epoxidgruppenterminierte, Uretdiongruppen-haltige Polyadditionsverbindungen mit einem Schmelzpunkt von 40-130 °C eingesetzt. Das Epoxid ist dabei in das Rückgrat verankert, es wird z.B. 2,3-Epoxy-1-propanol und/oder epoxidiertes Sojaöl eingesetzt. Zudem wird ein Katalysator aus der Gruppe der Metallacetylacetonate, Metallhydroxide, Metallalkoholate, quartären Ammoniumhydroxide, quartären Ammoniumfluoride oder quartären Ammoniumcarboxylate zur Aushärtung verwendet. Dabei beträgt die Aushärtetemperatur in der Regel 120-160 °C. Deren Anwendung als wässrige Systeme ist nicht möglich.

In der WO 2009/095117 A1 werden Pulverlackzusammensetzungen beschrieben, die einen Schmelzpunk von mehr als 40 °C aufweisen. Als Katalysator werden quarternäre Ammoniumsalze oder Phosphoniumsalze verwendet. Als Co-Katalysator wird eine Epoxidverbindung aus Terephtalsäurediglycidylether und Trimellitsäuretriglycidylether (Araldit PT 912) oder Acetylacetonat verwendet. Mit diesen Systemen sind keine Aushärtetemperaturen unter 120 °C möglich. Ebenfalls ist deren Anwendung als wässrige Systeme nicht möglich.

Die Auftragung von Pulverlackzusammensetzungen zum Erzeugen von Polyurethan-Schichten ist jedoch aufwändig hinsichtlich der dazu benötigten Vorrichtungen. Des Weiteren ist es wünschenswert niedrigere Vernetzungstemperaturen zu verwenden, um den Prozess energetisch effizienter zu gestalten. Ausgangspunkt sollten daher wässrige Polyurethandispersionen bilden, welche Uretdiongruppen enthalten, und einfacher und somit vorteilhafter zu handhaben sind. Nicht ionisch hydrophilierte Dispersionen weißen eine permanente Hydrophilie, schlechte Chemikalien und Wasserbeständigkeit auf. Deshalb sollten ionisch hydrophilierte Dispersionen verwendet werden. Bei diesen ist bekannt, dass anionische besser als kationische sind. Übliche anionische Systeme enthalten Carboxylgruppen, um eine besser Dispergierung bereitzustellen. Katalysatoren, welche empfindlich gegenüber Säuren, also auch Carboxylgruppen sind, wie zum Beispiel Na-Triazolat schienen deshalb nicht geeignet.

Eine saure, also anionische, selbstvernetzende Polyuretdiondispersion offenbart zum Beispiel die DE 10 2005 036 654 A1. Die Vernetzungstemperaturen solcher Systeme liegen jedoch bei über 130 °C.

Daher wurde ein Katalysatorsystem benötigt, das Säuren gegenüber tolerant ist und zu einer mindestens gleich guten Vernetzung führt. Diese Polyurethandispersionen waren jedoch nicht mit den Katalysatoren, die aus dem Stand der Technik bekannt sind, wie z.B. die in US 9080074 offenbarten Katalysatoren, vernetzbar.

Aufgabe der vorliegenden Erfindung war es deshalb Katalysatorsysteme für die Vernetzung wässriger anionischer Polyurethandispersionen, die Uretdiongruppen enthalten, zu entwickeln. Über die Uretdiongruppen soll eine Vernetzung der Polymere möglich sein. Dabei soll die Polymerisation vorzugsweise unter 100 °C (Niedertemperaturvernetzung) stattfinden können. Die Katalysatorsysteme sollen zudem unempfindlich gegenüber sauren Bedingungen sein. Vorzugsweise sollen die Katalysatorsysteme keine metallorganischen Verbindungen enthalten.

Überraschenderweise konnten Katalysatorsysteme gefunden werden, die für die Vernetzung von wässrigen Zusammensetzungen geeignet sind, die säurehaltige Gruppen und insbesondere Uretdiongruppen enthalten, und mit denen Vernetzungstemperaturen erreicht werden, die unter 100 °C liegen.

Die Aufgabe der vorliegenden Erfindung konnte gelöst werden durch:
Ein Katalysatorsystem, umfassend oder bestehend aus
A) mindestens eine Verbindung ausgewählt aus Azolen, Oxazolen, Thiazolen, Benzotriazol, Benzimidazol, Benzoxazol und deren Salzen;
B) mindestens einen Säurefänger, der mindestens eine Epoxidgruppe enthält; und
C) mindestens einen N,N,N'-trisubstituierte Amidinstrukturen enthaltenden Katalysator mit einem Amidingruppengehalt von 12,0 bis 47,0 Gew.-%, berechnet als CN2; Molekulargewicht = 40.

Insbesondere betrifft die vorliegende Erfindung:
1. Katalysatorsystem, umfassend oder bestehend aus
   A) mindestens eine Verbindung ausgewählt aus Azolen, Oxazolen, Thiazolen, Benzotriazol, Benzimidazol, und Benzoxazol und deren Salzen;
   B) mindestens einen Säurefänger, der mindestens eine Epoxygruppe enthält; und
   C) mindestens einen, eine N,N,N'-trisubstituierte Amidinstruktur enthaltenden, Katalysator mit einem Amidingruppengehalt von 12,0 bis 47,0 Gew.-%, berechnet als CN2; Molekulargewicht = 40.
2. Katalysatorsystem gemäß Ausführungsform 1, dadurch gekennzeichnet, dass die mindestens eine Verbindung A) ausgewählt ist aus Pyrazol, Imidazol, 1,2,3-Triazol, 1,2,4-Triazol und Benzotriazol und deren Salzen; insbesondere aus 1,2,3-Triazol, 1,2,4-Triazol und Benzotriazol und deren Salzen, stärker bevorzugt aus den Alkali-und Erdalkalisalzen von 1,2,3-Triazol, 1,2,4-Triazol und Benzotriazol; am stärksten bevorzugt aus den Na-, Li- und K-Salzen von 1,2,3-Triazol, 1,2,4-Triazol und Benzotriazol.
3. Katalysatorsystem gemäß Ausführungsform 1 oder 2, dadurch gekennzeichnet, dass der mindestens eine Säurefänger B) ausgewählt ist aus aliphatischen oder aromatischen Alkoholen, Diolen, Polyolen, Ethern und Säuren, welche mindestens eine Epoxygruppe enthalten.
4. Katalysatorsystem gemäß einer der vorstehenden Ausführungsformen, dadurch gekennzeichnet, dass der mindestens eine, eine N,N,N'-trisubstituierte Amidinstruktur enthaltende, Katalysator mit einem Amidingruppengehalt von 12,0 bis 47,0 Gew.-% berechnet als CN2 ; Molekulargewicht = 40, C) ausgewählt wird aus gegebenenfalls substituierten Alkyl-, Aralkyl-, oder Allylreste tragende Amidinbasen, wobei die CN-Doppelbindung der Amidinstruktur sowohl Teil eines offenkettigen Moleküls als auch Bestandteil eines cyclischen oder bicyclischen Systems oder auch exocyclisch an einem Ringsystem angeordnet sein kann, oder beliebige Mischungen solcher Amidine.
5. Katalysatorsystem gemäß einer der vorstehenden Ausführungsformen, dadurch gekennzeichnet, dass A) zu B) in einem Masse-Verhältnis von 1:1 bis 10:1, bevorzugt 2: 1 bis 6:1 vorliegen und/oder A) zu C) in einem Masse Verhältnis von 0,5:1 bis 5:1, bevorzugt 1:1 bis 2:1 vorliegen und/oder B) zu C) in einem Masse-Verhältnis von 1:1 bis 1:10, bevorzugt 1:1 bis 1:6 vorliegen.
6. Ein Kit, umfassend das Katalysatorsystem gemäß einer der Ausführungsformen 1 bis 5 und davon getrennt eine wässrige Uretdiondispersion, die dadurch gekennzeichnet ist, dass sie eine Säurezahl von 1 bis 100 mg KOH/g, bevorzugt 2 bis 50 mg KOH/g, stärker bevorzugt 5 bis 30 mg KOH/g aufweist, bevorzugt gemessen nach DIN EN ISO 2114: 2002-06 mit Aceton und Ethanol im Gewichtsverhältnis 2:1 als Lösungsmittel und zudem mindestens eine Carboxylgruppe aufweist.
7. Das Kit gemäß Ausführungsform 6, dadurch gekennzeichnet, dass das Äquivalentverhältnis von Uretdion zu eingesetzten Hydroxygruppen 0,5:1 bis 1:0,5 bevorzugt 0,75:1 bis 1:0,75, am stärksten bevorzugt 1:1 beträgt.
8. Verfahren zur Herstellung einer Polyurethanschicht, umfassend die Schritte
   i) Bereitstellen einer wässrigen Uretdiondispersion, die eine Säurezahl von 1 bis 100 mg KOH/g, bevorzugt 2 bis 50 mg KOH/g, stärker bevorzugt 5 bis 30 mg KOH/g, bevorzugt gemessen nach DIN EN ISO 2114: 2002-06 mit Aceton und Ethanol im Gewichtsverhältnis 2:1 als Lösungsmittel, und mindestens eine Carboxylgruppe aufweist;
   ii) Zugeben des Katalysatorsystems gemäß einer der Ausführungsformen 1 bis 5, bevorzugt unter Rühren;
   iii) Aufbringen der unter ii) erhaltenen Mischung auf ein Substrat;
   iv) Trocknen der Mischung aus Schritt iii), bevorzugt bei Raumtemperatur und
   v) Härten der Mischung aus Schritt iv) unter Wärmezufuhr bis 120°C, bevorzugt bis 100°C, für bis zu 180 Minuten, bevorzugt bis zu 120 Minuten.
9. Polyurethanschicht, insbesondere Polyurethanfilm, erhältlich durch ein Verfahren nach Ausführungsform 8.
10. Verwendung des Katalysatorsystems gemäß einer der Ausführungsformen 1 bis 5 zum Aushärten von wässrigen Uretdiondispersionen, die eine Säurezahl von 1 bis 100 mg KOH/g, bevorzugt 2 bis 50 mg KOH/g, stärker bevorzugt 5 bis 30 mg KOH/g, bevorzugt gemessen nach DIN EN ISO 2114: 2002-06 mit Aceton und Ethanol im Gewichtsverhältnis 2:1 als Lösungsmittel und mindestens eine Carboxylgruppe aufweisen und/oder zur Herstellung von Lacken oder Beschichtungen, insbesondere Polyurethanfilmen.

Falls nicht explizit anders angegeben werden in der vorliegende Erfindung Molekulargewichte mittels GPC (Gelpermeationschromatographie) unter Verwendung von Polystyrolstandards bestimmt.

Falls nicht explizit anders angegeben beziehen sich in der vorliegenden Erfindung Gew.-% auf das Gesamtgewicht des jeweiligen Systems oder das Gesamtgewicht der jeweiligen Komponente. Zum Beispiel kann ein Copolymer, ein bestimmtes Monomer in Gew.-% angegeben enthalten, in diesem Fall würden sich die Gewichtsprozente auf das Gesamtgewicht des Copolymers beziehen.

Falls nicht explizit anders angegeben bezieht sich der Begriff "mindestens ein" auf die Art der Verbindungen und nicht auf einzelne Moleküle. Zum Beispiel ist mindestens ein Säurefänger B) so zu verstehen, dass mindestens eine Art von Säurefänger enthalten ist, dieser jedoch in einer willkürlichen Anzahl an Molekülen in der Zusammensetzung enthalten ist. Es können also auch zwei oder mehr Arten an Säurefängern in jeweils willkürlicher Anzahl vorhanden sein, falls die Mengen nicht definiert sind.

Ein Kit im Sinne der vorliegenden Erfindung ist ein System in dem das Katalysatorsystem der vorliegenden Erfindung und die wässrige Carboxylgruppen-haltige Uretdiondispersion räumlich getrennt voneinander vorliegen.

Das Katalysatorsystem umfasst mindestens eine Verbindung A), ausgewählt aus Azolen, Oxazolen, Thiazolen, Benzotriazol, Benzimidazol, und Benzoxazol und deren Salzen. Bevorzugt ist die mindestens eine Verbindung A) ausgewählt aus Pyrazol, Imidazol, 1,2,3-Triazol, 1,2,4-Triazol und Benzotriazol und deren Salzen. Bei den Salzen handelt es sich bevorzugt um Alkali-, Erdalkali- oder Ammoniumsalze. Insbesondere bevorzugt ist die mindestens eine Verbindung A) ausgewählt aus 1,2,3-Triazol, 1,2,4-Triazol und Benzotriazol und deren Salzen, stärker bevorzugt aus den Alkali-und Erdalkalisalzen von 1,2,3-Triazol, 1,2,4-Triazol und Benzotriazol; am stärksten bevorzugt aus den Na-, Li- und K-Salzen von 1,2,3-Triazol, 1,2,4-Triazol und Benzotriazol, insbesondere die Natriumsalze davon.

Ferner umfasst das Katalysatorsystem mindestens einen Säurefänger B), der mindestens eine Epoxygruppe enthält. In einer bevorzugten Ausführungsform ist der mindestens eine Säurefänger B) ausgewählt aus aliphatischen oder aromatischen Alkoholen, Diolen, Polyolen, Ethern und Säuren, welche mindestens eine Epoxygruppe enthalten, bevorzugt ausgewählt aus C₂₋₂₀ Alkoholen, C₂₋₂₀ Diolen, C₄₋₅₀ Polyolen mit mindestens 3 Hydroxy-Gruppen, C₃₋₅₀ Ethern und Polyethern und C₃₋₂₀ Säuren, welche mindestens eine Epoxygruppe enthalten. Insbesondere bevorzugt sind mono- und polyfunktionelle Glycidylether, wie zum Beispiel Butylglycidylether, Pentaerythrittetraglycidylether, Glycidylisopropylether, 2-Ethylhexyl-glycidylether, Polyethylenglykoldiglycidylether, 1,4-Cyclohexanedimethanoldiglycidylether oder ein polyfunktioneller Glycidylether von Trimethylolpropan, der kommerziell erhältlich unter dem Namen HELOXY™ Modifier TP der Firma Hexion ist.

Der mindestens eine Säurefänger B) weist bevorzugt eine Viskosität von 5 bis 500 mPas, stärker bevorzugt von 50 bis 250 mPas, am stärksten bevorzugt von 100 bis 200 mPas, bei 25°C gemessen nach DIN 53015:2001-02, auf.

In einer weiteren bevorzugten Ausführungsform weist der mindestens eine Säurefänger B) ein Epoxyäquivalent (Gewicht pro Epoxygruppe) von 120 bis 650 g/eq, bevorzugt 125 bis 250 g/eq auf, gemessen nach DIN 16945:1989-03.

Ebenfalls bevorzugt weist der mindestens eine Säurefänger B) eine Epoxyzahl von 20,0 bis 35,0 %, stärker bevorzugt von 23,5 bis 33,0 %, am stärksten bevorzugt von 26,5 bis 32,5 % auf, gemessen nach DIN 16945:1989-03.

Das Katalysatorsystem enthält ferner mindestens einen N,N,N'-trisubstituierte Amidinstrukturen enthaltenden Katalysator mit einem Amidingruppengehalt von 12,0 bis 47,0 Gew.-%, berechnet als CN2 ; Molekulargewicht = 40. Geeignete Amidinkatalysatoren C), in denen die CN-Doppelbindung als Teil eines offenkettigen Moleküls vorliegt, sind beispielsweise N,N-Dimethyl-N'-phenylformamidin oder N,N,N'-Trimethylformamidin, deren Herstellung z. B. in Chem. Ber. 98, 1078 (1965) beschrieben ist. Als Beispiele für geeignete Amidine C), bei denen die CN-Doppelbindung Bestandteil eines cyclischen Systems ist, seien hier genannt: in 1-Stellung substituierte 2-Methyltetrahydropyrimidine, wie sie z. B. nach der Lehre der DE 2 439 550 A1 durch Umsetzung von N-monosubstituierten 1,3-Propandiaminen mit Acetessigsäurederivaten erhalten werden können, oder monocyclische Amidinbasen, wie sie die gemäß DE 1 078 568 A1 durch Reaktion von Carbamoylchloriden aus sek. Aminen mit Lactamen zugänglich sind. Geeignete Katalysatoren C), bei denen die CN-Doppelbindung exocyclisch an einem Ringsystem angeordnet ist sind beispielsweise Imine N-alkylsubstituierter Lactame, wie 2-Methylimino-1-methylpyrrolidon, dessen Herstellung z. B. in Chem. Ber. 101, 3002 (1968) beschrieben ist.

Bevorzugt sind als mindestens eine Komponente C) bicyclische, N,N,N'-trisubstituierte Amidinstrukturen enthaltende Katalysatoren der allgemeinen Formel (1) 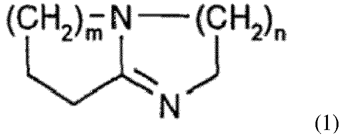 in welcher m für eine ganze Zahl von 1 bis 9, vorzugsweise von 1 bis 3, und n für eine ganze Zahl von 1 bis 3, vorzugsweise für 2, steht.

Die Herstellung solcher bicyclischen Amidine ist bekannt und beispielsweise in der DE 1 545 855 A1 oder der EP 662 476 A1 beschrieben. Besonders bevorzugte Katalysatoren C) sind 1,5-Diazabicyclo[4.3.0]non-5-en (DBN) und 1,8-Diazabicyclo[5.4.0]undec-7-en (DBU), insbesondere DBU.

In einer bevorzugten Ausführungsform sind keine Ammonium- oder Phosphoniumsalze enthalten. In einer weiteren bevorzugten Ausführungsform sind keine metallorganischen Katalysatoren und/oder quartären Ammoniumhydroxide, quartären Ammoniumfluoride oder quartären Ammoniumcarboxylate enthalten. In einer weiteren bevorzugten Ausführungsform sind keine weiteren Katalysatoren enthalten.

Die Erfindung betrifft ferner ein Kit, indem eine saure wässrige Uretdiondispersion und das Katalysatorsystem der vorliegenden Erfindung getrennt voneinander vorliegen. Geeignete Uretdiondispersionen sind die generell dem Fachmann bekannten, mit der Voraussetzung, dass sie eine Säurezahl von 1 bis 100 mg KOH/g, bevorzugt 2 bis 50 mg KOH/g, stärker bevorzugt 5 bis 30 mg KOH/g, bevorzugt gemessen nach DIN EN ISO 2114: 2002-06 mit Aceton und Ethanol im Gewichtsverhältnis 2:1 als Lösungsmittel, und mindestens eine Carboxylgruppe aufweisen.

In einer bevorzugten Ausführungsform weißt die wässrige Uretdiondispersion gemäß der vorliegenden Erfindung ein Äquivalentverhältnis von Uretdion zu eingesetzten Hydroxygruppen von 0,5:1 bis 1:0,5 bevorzugt von 0,75:1 bis 1:0,75, am stärksten bevorzugt von 1:1 auf.

Geeignete wässrige Polyurethan-Dispersionen enthaltend üblicherweise im selben Polymermolekül die wesentlichen Struktureinheiten (I) und (II) 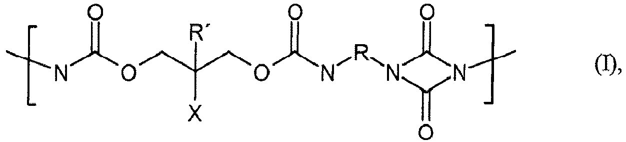 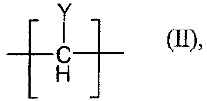 in welchen, R ein aliphatischer, cycloaliphatischer, araliphatischer oder aromatischer Rest ist, der sich ableitet von einem Polyisocyanat ausgewählt aus der Gruppe Tetramethylen-diisocyanat, Cyclohexan-1,3- oder -1,4-diisocyanat, Pentamethylendiisocyanant (PDI), Hexamethylendiisocyanat (HDI), 1-Isocyanato-3,3,5-trimethyl-5-isocyanatomethylcyclohexan (Isophorondiisocyanat IPDI), Dicyclohexylmethan-2,4'-und/oder 4,4'-diisocyanat, Tetramethylxylylendiisocyanat (TMXDI), Triisocyanatononan, Toluylendiisocyanat (TDI), Diphenylmethan-2,4'- und/oder 4,4'-diisocyanat (MDI), Triphenylmethan-4,4'-diisocyanat oder Naphthylen-1,5-diisocyanat, R' ein Alkyrest, bevorzugt Ethyl oder Methyl, besonders bevorzugt Methyl ist, X ein Carbonsäure-(COOH) oder Carboxylat (COO⁻)-Rest ist und Y NH₂, NHR" oder OH, bevorzugt OH ist und R" ein Alkyrest, bevorzugt Hexyl, Butyl, Propyl, Ethyl oder Methyl, besonders bevorzugt Methyl ist.

Die Dispersion, welche in der vorliegenden Erfindung eingesetzt werden kann, kann sowohl Uretdion-Gruppen (fungieren als verkappte Isocyanate) und Hydroxyl-Gruppen in einem Molekül enthalten.

Geeignete Uretdion-Dispersionen können durch folgendes Verfahren hergestellt werden, das folgende Schritte umfasst:
In einem ersten Schritt (I) wird ein ionisches Uretdiongruppen-haltiges, hydrophiliertes, Hydroxyl- oder Isocyanatendgruppen-haltiges Prepolymer durch Umsetzung von
- mindestens einer Uretdiongruppen-haltigen Polyisocyanatkomponente (A2'), mit einer Isocyanatgruppen-Funktionalität ≥ 2 und einem Verhältnis von Uretdion- zu Isocyanatgruppen von mindestens 0,10 und
- mindestens einer Verbindung (C'), die mindestens eine isocyanatreaktive sowie eine säurefunktionelle Gruppe aufweist,
- gegebenenfalls einer weiteren Polyolkomponente (B1') mit einer Hydroxylgruppen-Funktionalität von ≥ 2 und einem Molekulargewicht Mₙ von 62 bis 500 g/mol, bevorzugt 62 bis 400 g/mol, besonders bevorzugt 62 bis 300 g/mol,
- gegebenenfalls einem oder mehreren Polyisocyanaten (A1') mit einer NCO-Funktionalität von ≥ 2, die von (A2') verschieden sind und bevorzugt keine Uretdiongruppen enthalten, hergestellt, in einem zweiten Schritt.

(II) wird das Uretdiongruppen-haltiges Prepolymer,
welches Hydroxylgruppen- oder Isocyanatgruppenterminiert sein kann, durch Umsetzung von
- gegebenenfalls einer oder mehrerer Polyolkomponenten (B2') mit einer Hydroxylgruppen-Funktionalität von > 1 sowie
- gegebenenfalls Polyisocyanate (A1') mit einer NCO-Funktionalität von ≥ 2 und
- mindestens einer Polyolkomponente (B3') mit einer mittleren Hydroxylgruppen Funktionalität von ≥ 2 und einem Molekulargewicht Mn von 500 bis 5000 g/mol, bevorzugt 500 bis 3000 g/mol, besonders bevorzugt 500 bis 2000 g/mol, in ein Isocyanatgruppen-freies und Hydroxylgruppen-funktionelles Polyurethanpolymer überführt, welches zur vollständigen oder teilweisen Neutralisation mit einem Neutralisierungsmittel (N) versetzt und in Wasser dispergiert wird. Zu dieser wässrigen Zusammensetzung wird dann das Katalysatorsystem der vorliegenden Erfindung gegeben.

Ebenfalls kann die Durchführung der ersten beiden Syntheseschritte in umgekehrter Reihenfolge oder aber in einem einzigen Reaktionsschritt erfolgen. Es ist ebenfalls möglich, bei der Herstellung des Prepolymers (I) anteilmäßig die Polyolkomponente (B1') einzusetzen. Ebenso ist es möglich, bei der Prepolymerisierung (II) des Uretdiongruppen-haltigen Polyisocyanatgemisches ebenfalls anteilsmäßig die Verbindung (C') einzusetzen.

In einer bevorzugten Ausführungsform der Erfindung wird nach Zugabe der Polyolkomponente (B3') gleichzeitig oder in einem weiteren Schritt nochmals eine säurefunktionelle Verbindung (C') und eine weitere Polyisocyanatkomponente (A1') zugegeben.

Das Verhältnis der Isocyanatgruppen, einschließlich der Uretdiongruppen, zu allen gegenüber Isocyanatgruppen reaktionsfähigen Gruppen ist bevorzugt von 0,5 bis 5,0 zu 1, besonders bevorzugt von 0,6 bis 2,0 zu 1, insbesondere von 0,8 bis 1,5 zu 1 einzuhalten.

Geeignete Polyisocyanatkomponenten (A1') sind aliphatische, cycloaliphatische, araliphatische und/oder aromatische Isocyanate mit einer mittleren Funktionalität von 2 bis 5, bevorzugt 2 und mit einem Isocyanatgehalt von 0,5 bis 60 Gew.-%, bevorzugt von 3 bis 40 Gew.-%, besonders bevorzugt von 5 bis 30 Gew.-%, wie z.B. Tetramethylen-diisocyanat, Cyclohexan-1,3- und 1,4-diisocyanat, Pentamethylendiisocyanat, Hexamethylendiisocyanat (HDI), 1-Isocyanato-3,3,5-trimethyl-5-isocyanatomethylcyclohexan (Isophorondiisocyanat IPDI), Dicyclohexylmethan-2,4'- und/oder 4,4'-diisocyanat, Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat sowie beliebige Gemische derartiger Isocyanate. Bevorzugt sind Isophorondiisocyanat, Dicyclohexylmethan-2,4'-und/oder 4,4'-diisocyanat oder Hexamethylendiisocyanat insbesondere Isophorondiisocyanat.
Ebenfalls als geeignete Polyisocyanatkomponenten (A1') sind durch Modifizierung der vorstehend genannten Di- und/oder Triisocyanate hergestellte Polyisocyanate mit Isocyanurat-, Iminooxadiazintrion-, Urethan-, Allophanat-, Biuret- und/oder Oxadiazintrionstruktur, wie sie beispielsweise in J. Prakt. Chem. 336 (1994) 185 - 200 oder DE-A 16 70 666 und EP-A 798 299 beispielhaft beschrieben sind.

Geeignete Polyisocyanate (A1') sind ferner die bekannten, endständige Isocyanatgruppen aufweisenden Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanaten reaktionsfähigen funktionellen Gruppen zugänglich sind. In diesen bekannten Prepolymeren entspricht das Verhältnis von Isocyanatgruppen zu gegenüber NCO reaktiven Wasserstoffatomen 1,05:1 bis 10:1, bevorzugt 1,5:1 bis 4:1, wobei die Wasserstoffatome bevorzugt aus Hydroxylgruppen stammen. Die Art und Mengenverhältnisse der bei der Herstellung von NCO-Prepolymeren eingesetzten Ausgangsmaterialien werden so gewählt, dass die NCO-Prepolymeren bevorzugt eine mittlere NCO-Funktionalität von 2 bis 3 und ein Zahlenmittel der Molmasse von 300 bis 10000 g/mol, bevorzugt 800 bis 4000 g/mol aufweisen.

Als Komponente (A2') sind Polyisocyanate geeignet, die mindestens eine Isocyanatgruppe und mindestens eine Uretdiongruppe enthalten. Diese werden, wie beispielsweise beschrieben in WO 02/92657 A1 oder WO 2004/005364 A1 durch Reaktion geeigneter Ausgangsisocyanate hergestellt. Dabei wird unter Katalyse, beispielsweise mit Triazolaten oder 4-Dimethylaminopyridin (DMAP) als Katalysatoren ein Teil der Isocyanatgruppen in Uretdiongruppen überführt. Beispiele für Isocyanate, aus denen die Uretdion-haltigen Bausteine (A2') aufgebaut werden sind Tetramethylen-diisocyanat, Cyclohexan-1,3- und 1,4-diisocyanat, Pentamethylendiisocyanat, Hexamethylendiisocyanat (HDI), 1-Isocyanato-3,3,5-trimethyl-5-isocyanatomethylcyclohexan (Isophorondiisocyanat IPDI), Dicyclohexylmethan-2,4'-und/oder 4,4'-diisocyanat, Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat sowie beliebige Gemische derartiger Isocyanate. Bevorzugt sind Isophorondiisocyanat, Dicyclohexylmethan-2,4'-und/oder 4,4'-diisocyanat oder Hexamethylendiisocyanat.
Außer den Isocyanatgruppen und Uretdiongruppen kann die Komponente (A2') auch Isocyanurat-, Biuret-, Allophanat-, Urethan- und/oder Harnstoff-Strukturen aufweisen.

Die Polyolkomponente (B1') enthält bevorzugt 2- bis 6-wertige Polyolkomponenten des Molekulargewichts Mn von 62 bis 500 g/mol, bevorzugt 62 bis 400 g/mol, besonders bevorzugt 62 bis 300 g/mol. Bevorzugte Polyolkomponenten (B1') sind beispielsweise 1,4- und/oder 1,3-Butandiol, 1,6-Hexandiol, 2,2,4-Trimethyl-1,3-pentandiol, Trimethylolpropan, Polyester- und/oder Polyetherpolyole des mittleren Molgewichts Mₙ von kleiner oder gleich 500 g/mol.

Geeignete säurefunktionelle Verbindungen (C') sind hydroxyfunktionelle Carbonsäuren, bevorzugt Mono- und Dihydroxycarbonsäuren, wie z.B. 2-Hydroxyessigsäure, 3-Hydroxypropansäure oder 12-Hydroxy-9-octadecansäure (Rizinolsäure). Bevorzugte Carbonsäuren (C') sind solche, bei denen die Carboxylgruppe aufgrund sterischer Effekte in ihrer Reaktivität gehindert ist, wie z.B. Milchsäure. Besonders bevorzugt sind 3-Hydroxy-2,2-dimethylolpropansäure (Hydroxypivalinsäure) oder Dimethylolpropionsäure, ganz besonders bevorzugt wird ausschließlich Dimethylolpropionsäure eingesetzt.

Falls die Komponente (B1') anteilig in Schritt (I) mitverwendet wird, beträgt ihr Anteil jedoch maximal 50 Gew.-%, bezogen auf die Summe der Komponenten (C') und (B1'). Bevorzugt wird in Schritt (I) ausschließlich Komponente (C') eingesetzt.

Die Polyolkomponente (B2') ist ausgewählt aus der Gruppe der
b1) 2- bis 6-wertigen Alkohole mit mittleren Molgewichten Mn von 62 bis 300 g/mol, bevorzugt von 62 bis 182 g/mol, besonders bevorzugt von 62 bis 118 g/mol,
b2) linearen, difunktionellen Polyole mit mittleren Molgewichten Mn von 350 bis 4000 g/mol, bevorzugt von 350 bis 2000 g/mol, besonders bevorzugt von 350 bis 1000 g/mol,
b3) monofunktionellen linearen Polyether mit mittleren Molgewichten Mn von 350 bis 2500 g/mol, bevorzugt von 500 bis 1000 g/mol.

Als Polyolkomponente (b1) kommen 2- bis 6-wertige Alkohole und/oder deren Gemische in Betracht, die keine Ester-Gruppen aufweisen. Typische Beispiele sind Etandiol-1,2, Propandiol-1,2 und -1,3, Butandiol-1,4, -1,2 oder 2,3-Hexandiol-1,6, 1,4-Dihydroxycyclohexan, Glycerin, Trimethylolethan, Trimethylolpropan, Pentaerythrit und Sorbit. Selbstverständlich können als Komponente (b1) auch Alkohole mit ionischen oder in ionische Gruppen überführbare Gruppen eingesetzt werden. Bevorzugt sind beispielsweise 1,4- oder 1,3-Butandiol, 1,6-Hexandiol oder Trimethylolpropan sowie deren Mischungen.

Geeignete lineare difunktionelle Polyole (b2) sind ausgewählt aus der Gruppe der Polyether, Polyester und/oder Polycarbonate. Bevorzugt enthält die Polyol-Komponente (b2) mindestens ein Estergruppen enthaltendes Diol des Molekulargewichts Mn von 350 bis 4000 g/mol, bevorzugt von 350 bis 2000 g/mol, besonders bevorzugt von 350 bis 1000 g/mol. Es handelt sich hierbei um das mittlere, aus der Hydroxylzahl berechenbare Molekulargewicht. Im Allgemeinen handelt es sich bei den Esterdiolen um Gemische, in denen in untergeordneten Mengen auch einzelne Bestandteile vorliegen können, die ein unter- oder oberhalb dieser Grenzen liegendes Molekulargewicht aufweisen. Es handelt sich um die an sich bekannten Polyesterdiole, die aus Diolen und Dicarbonsäuren aufgebaut sind.

Geeignete Diole sind beispielsweise 1,4-Dimethylolcyclohexan, 1,4- oder 1,3-Butandiol, 1,6-Hexandiol, Neopentylglykol, 2,2,4-Trimethyl-1,3-pentandiol, Trimethylolpropan sowie Pentaerythrit bzw. Gemische derartiger Diole. Geeignete Dicarbonsäuren sind beispielsweise aromatische Dicarbonsäuren wie Phthalsäure, Isophthalsäure und Terephthalsäure, cycloaliphatische Dicarbonsäuren wie z.B. Hexahydrophthalsäure, Tetrahydrophthalsäure, Endomethylentetrahydrophthalsäure bzw. deren Anhydride und aliphatische Dicarbonsäuren, die bevorzugt Verwendung finden, wie Bernsteinsäure, Glutarsäure, Adipinsäure, Korksäure, Azelainsäure und Sebacinsäure oder deren Anhydride.

Polyesterdiole auf Basis von Adipinsäure, Phthalsäure, Isophthalsäure und Tetrahydrophthalsäure werden bevorzugt als Komponente (b2) verwendet. Als bevorzugte Diole werden beispielsweise 1,4- oder 1,3-Butandiol, 1,6-Hexandiol oder Trimethylolpropan sowie deren Mischungen eingesetzt.

Ebenfalls geeignet als Komponente (b2) sind Polycaprolactondiole des mittleren Molekulargewichts von 350 bis 4000 g/mol, bevorzugt von 350 bis 2000 g/mol, besonders bevorzugt von 350 bis 1000 g/mol, die in an sich bekannter Weise aus einem Diol oder Diolgemisch der oben beispielhaft genannten Art als Starter und ε-Caprolacton hergestellt worden sind. Das bevorzugte Startermolekül ist hierbei 1,6-Hexandiol. Besonders bevorzugt sind solche Polycaprolactondiole, die durch Polymerisation von ε-Caprolacton unter Verwendung von 1,6-Hexandiol als Starter hergestellt worden sind.

Als lineare Polyolkomponente (b2) können auch (Co)polyether aus Ethylenoxid, Propylenoxid und/oder Tetrahydrofuran eingesetzt werden. Bevorzugt sind Polyether mit einem mittleren Molgewicht Mn von 500 bis 2000 g/mol, wie z.B. Polyethylenoxide oder Polytetrahydrofurandiole.

Geeignet als (b2) sind auch hydroxylgruppenhaltige Polycarbonate, bevorzugt mittleren Molgewichts Mn von 400 bis 4000 g/mol, bevorzugt 400 bis 2000 g/mol wie z.B. Hexandiolpolycarbonat sowie Polyestercarbonate.

Geeignete monofunktionelle lineare Polyether (b3) sind z.B. (Co)polyether aus Ethylenoxid und/oder Propylenoxid. Bevorzugt sind Monoalkohol-gestartete Polyalkylenoxid-polyether mittleren Molgewichts Mn von 350 bis 2500 g/mol mit mindestens 70 % Ethylenoxid-Einheiten.

Besonders bevorzugt sind (Co)polymere mit mehr als 75 % Ethylenoxideinheiten und einem Molgewicht Mn von 350 bis 2500 g/mol, bevorzugt von 500 bis 1000 g/mol. Als Startermoleküle bei der Herstellung dieser Polyether werden bevorzugt monofunktionelle Alkohole mit 1 bis 6 Kohlenstoffatomen eingesetzt.

Geeignete Polyole (B3') sind Polyole mit einer OH-Funktionalität größer oder gleich 2, und mit mittleren Molgewichten von 500 bis 5000 g/mol, bevorzugt von 500 bis 3000 g/mol, besonders bevorzugt von 500 bis 2000 g/mol.

Bevorzugte Polyole (B3') sind z.B. Polyether mittleren Molgewichts von 300 bis 2000 g/mol und einer mittleren Funktionalität von 2,5 bis 4 OH-Gruppen/Molekül. Ebenfalls bevorzugt sind Polyester mittlerer OH-Funktionalität von 2,5 bis 4,0. Geeignete Diole und Dicarbonsäuren für die Polyester sind die unter der Komponente (b2) genannten, jedoch enthalten sie zusätzlich tri- bis hexafunktionellen kurzkettige Polyole, wie z.B. Trimethylolpropan, Pentaerythrit oder Sorbit. Es ist bevorzugt Polyesterpolyole auf Basis von Adipinsäure, Phthalsäure, Isophthalsäure und Tetrahydrophthalsäure sowie Butandiol-1,4 und Hexandiol-1,6 einzusetzen.

Ebenfalls geeignet als Komponente (B3') sind (Co)polyether aus Ethylenoxid, Propylenoxid und/oder Tetrahydrofuran mittlerer Funktionalität von größer oder gleich 2, ebenso wie Polycarbonatpolyole.

Das erfindungsgemäße Verfahren sollte so durchgeführt werden, dass bei der Umsetzung der Komponenten (A') und (B1') gemäß der theoretischen stöchiometrischen Gleichung möglichst wenig an nicht umgesetzten Überschusskomponenten (A) und/oder (B1) vorliegt.

Die Herstellung der wässrigen Dispersionen, enthaltend die erfindungsgemäßen selbstvernetzenden Polyurethane, erfolgt nach Verfahren des Standes der Technik.

Die in den erfindungsgemäßen Polyurethanen vorhandenen Carbonsäuregruppen werden bevorzugt zu mindestens 50 %, stärker bevorzugt 80 % bis 120 %, besonders bevorzugt 95 bis 105 % mit geeigneten Neutralisationsmitteln (N) neutralisiert und anschließend mit entionisiertem Wasser dispergiert. Die Neutralisation kann vor, während oder nach dem Dispergier- bzw. Löseschritt erfolgen. Bevorzugt ist jedoch die Neutralisation vor der Wasserzugabe.

Geeignete Neutralisationsmittel (N) sind beispielsweise Triethylamin, Dimethylaminoethanol, Dimethylcyclohexylamin, Triethanolamin, Methyldiethanolamin, Diisopropanolamin, Ethyldiisopropylamin, Diisopropylcyclohexylamin, N-Methylmorpholin, 2-Amino-2-methyl-1-propanol, Ammoniak oder andere gebräuchliche Neutralisationsmittel oder deren Neutralisationsgemische.

Bevorzugt sind tert. Amine wie z.B. Triethylamin, Diisopropylhexylamin, besonders bevorzugt ist Dimethylethanolamin.

Zur Regulierung der Viskosität können dem Reaktionsgemisch gegebenenfalls auch Lösungsmittel zugegeben werden. Geeignet sind alle bekannten Lacklösemittel wie z.B. N-Methylpyrrolidon, Methoxypropylacetat, Proglyde® DMM (Dow Chemicals), Shellsol® (Shell AG) oder Xylol. Bevorzugt werden Mengen von 0 bis 10 Gew.-%, bevorzugt 0 bis 5 Gew.-%, eingesetzt. Das Lösungsmittel wird bevorzugt während der Polymerisation zugegeben.

Gegebenenfalls mitzuverwendende Hilfs- und Zusatzmittel der Beschichtungstechnologie wie beispielsweise Pigmente, Verlaufsmittel, oder blasenverhindernde Zusatzmittel können den erfindungsgemäßen wässrigen Dispersionen ebenfalls zugesetzt werden.

Alternative, ebenfalls geeignete Uretdiondispersionen der vorliegenden Erfindung sind lagerstabile, reaktive wässrige uretdiongruppenhaltige Zusammensetzungen, welche eine in Wasser und ggf. organischen Lösemitteln dispergiert vorliegende physikalische Mischung aus
(A11) mindestens einem uretdiongruppenhaltigen Härter, basierend auf aliphatischen, (cyclo) aliphatischen, araliphatischen und/oder aromatischen Polyisocyanaten, welcher keine chemisch gebundenen hydrophilierenden Gruppen enthält;
(B12) mindestens einem Hydroxygruppen enthaltenden Polyol, welches mindestens eine chemisch gebundene Carbonsäuregruppe enthält;
(C13) gegebenenfalls Lösemittel, und
(D14) gegebenenfalls Hilfs- und Zusatzstoffe,
wobei das Mengenverhältnis der Komponenten (A11) und (B12) so bemessen ist, dass das molare Verhältnis von den als Uretdion vorliegenden NCO-Gruppen des Härters (A11) zu NCO-reaktiven Gruppen des Polyols (B12) 0,5 : 1 bis 1 : 0,5 beträgt und die wässrige Zusammensetzung eine Säurezahl von 1 bis 100 mg KOH/g, bevorzugt 2 bis 50 mg KOH/g, stärker bevorzugt 5 bis 30 mg KOH/g, bevorzugt gemessen nach DIN EN ISO 2114: 2002-06 mit Aceton und Ethanol im Gewichtsverhältnis 2:1 als Lösungsmittel aufweist. Zu dieser wässrigen Zusammensetzung wird dann das Katalysatorsystem der vorliegenden Erfindung gegeben.

Geeignete, Uretdiongruppen enthaltende Polyisocyanate als Ausgangsverbindungen für die Komponente (A11) sind die vorstehend beschriebenen Polyisocyanate (A2').

Die Umsetzung dieser uretdiongruppentragenden Polyisocyanate zu Uretdiongruppen aufweisenden Härtern (A11) beinhaltet die Reaktion der freien NCO-Gruppen der Ausgangsverbindungen (A2') mit der Polyolkomponente (B1'), gegebenenfalls unter Mitverwendung der Polyolkomponente (b2).

Als Polyolkomponente bei der Herstellung der Uretdiongruppen aufweisenden Härter (A11) können auch niedermolekulare Estergruppen aufweisende Diole eines mittleren, aus Funktionalität und Hydroxylzahl berechenbaren Molekulargewichts von 134 bis 349 g/mol, vorzugsweise 176 bis 349 g/mol, zum Einsatz kommen.
Hierbei handelt es sich beispielsweise um die an sich bekannten, Estergruppen aufweisenden Diole oder Gemische solcher Diole, wie sie sich z. B. durch Umsetzung von Alkoholen mit unterschüssigen Mengen an Dicarbonsäuren, entsprechenden Dicarbonsäureanhydriden, entsprechenden Dicarbonsäureestern von niederen Alkoholen oder Lactonen herstellen lassen. Beispiele geeigneter Säuren sind Bernsteinsäure, Adipinsäure, Sebacinsäure, Phthalsäure, Isophthalsäure, Phthalsäureanhydrid, Tetrahydrophthalsäure, Maleinsäure, Maleinsäureanhydrid, Terephthalsäuredimethylester und Terephthalsäure-bis-glykolester. Geeignete Lactone zur Herstellung dieser Esterdiole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Bei der Herstellung der Uretdiongruppen aufweisenden Härter (A11) können auch aminofunktionelle Verbindungen eingesetzt werden. Beispiele für geeignete niedermolekulare aminofunktionelle Verbindungen sind aliphatische und cycloaliphatische Amine und Aminoalkohole mit primär und/oder sekundär gebundenen Aminogruppen, wie z. B. Cyclohexylamin, 2-Methyl-1,5-pentandiamin, Diethanolamin, Monoethanolamin, Propylamin, Butylamin, Dibutylamin, Hexylamin, Monoisopropanolamin, Diisopropanolamin, Ethylendiamin, 1,3-Diaminopropan, 1,4-Diaminobutan, Isophorondiamin, Diethylentriamin, Ethanolamin, Aminoethyl-ethanolamin, Diaminocyclohexan, Hexamethylendiamin, Methyliminobispropylamin, Iminobispropylamin, Bis(aminopropyl)piperazin, Aminoethylpiperazin, 1,2-Diaminocyclohexan, Triethylentetramin, Tetraethylenpentamin, Bis(4-amino-cyclohexyl)methan, Bis(4-amino-3-methylcyclohexyl)methan, Bis(4-amino-3,5-dimethylcyclohexyl)methan, Bis(4-amino-2,3,5-trimethylcyclohexyl)methan, 1,1-Bis(4-aminocyclohexyl)propan, 2,2-Bis(4-aminocyclohexyl)propan, 1,1-Bis(4-aminocyclohexyl)ethan, 1,1-Bis(4-aminocyclohexyl)butan, 2,2-Bis(4-aminocyclohexyl)butan, 1,1-Bis(4-amino-3-methylcyclohexyl)ethan, 2,2-Bis(4-amino-3-methylcyclohexyl)propan, 1,1-Bis(4-amino-3,5-dimethylcyclohexyl)ethan, 2,2-Bis(4-amino-3,5-dimethylcyclohexyl)propan, 2,2-Bis(4-amino-3,5-dimethylcyclohexyl)butan, 2,4-Diaminodicyclohexylmethan, 4-Aminocyclohexyl-4-amino-3-methylcyclohexylmethan, 4-Amino-3,5-dimethylcyclohexyl-4-amino-3-methylcyclohexylmethan und 2-(4-Aminocyclohexyl)-2-(4-amino-3-methylcyclohexyl)methan.

Bei der Herstellung der Uretdiongruppen aufweisenden Härter (A11) können ggf. Lösemittel verwendet werden. Als Lösemittel für die Uretdiongruppen aufweisenden Härter (A11) kommen alle flüssigen Substanzen in Frage, die nicht mit anderen Inhaltstoffen reagieren, z. B. Aceton, Methylethylketon, Ethylacetat, Butylacetat, Xylol, Solvesso 100, Solvesso 150, Propylenglykolmono-n-butylether (Dowanol PnB, (Dow Chemicals)), Proglyde® DMM (Dow Chemicals), Methoxypropylacetat und Dibasicester.

Die Uretdiongruppen aufweisenden Härter (A11) sind frei von ionisch oder nicht ionisch hydrophilisierend wirkenden Verbindungen. Unter den ionisch hydrophilisierend wirkenden Verbindungen versteht der Fachmann Verbindungen, die mindestens eine zur Anionen- oder Kationenbildung befähigte Gruppe aufweisen. Zur Anionen- oder Kationenbildung befähigte Gruppen sind diejenigen, die durch chemische Reaktion in eine anionische bzw. kationische Gruppe umgewandelt werden können, insbesondere durch Neutralisation.

Die Uretdiongruppen aufweisenden Härter (A11) sind bevorzugt frei von zu Anionenbildung befähigten, Carboxylgruppen haltigen Polyolen oder Diolen wie z.B. Dihydroxycarbonsäuren, wie α,α-Dialkylolalkansäuren, insbesondere α,α-Dimethylolalkansäuren, wie 2,2-Dimethylolessigsäure, 2,2-Dimethylolpropionsäure, 2,2-Dimethylolbuttersäure, 2,2-Dimethylolpentansäure, Dihydroxybernsteinsäure, oder Polyhydroxysäuren, wie Glukonsäure. Weiterhin sind die Uretdiongruppen aufweisenden Härter (A11) bevorzugt frei von zu Anion-Bildung befähigten, aminogruppenhaltigen Verbindungen wie beispielsweise α,Ω-Diaminovaleriansäure, 2,4-Diaminotoluol-sulfonsäure udgl. Die Uretdiongruppen aufweisenden Härter (A11) sind ebenfalls bevorzugt frei von zu Anionenbildung befähigten, Sulfonsäuregruppen.

Darüber hinaus sind die Uretdiongruppen aufweisenden Härter (A11) bevorzugt frei von zu Kationenbildung befähigten Verbindungen aus der Gruppe der tertiäre Amino- oder Ammonium-Verbindungen, wie z.B. Tris (hydroxyalkyl) amine, N,N'-Bis (hydroxyalkyl) alkylamine, N-Hydroxyalkyldialkylamine, Trisaminoalkylamine, N,N'- Bisaminoalkylalkylamine, N-Aminoalkyldialkylamine, sowie Mischungen davon.

Die Uretdiongruppen aufweisenden Härter (A11) sind ferner bevorzugt frei von nichtionisch hydrophilisierenden Verbindungen, wie z.B. Polyalkylenoxidpolyetheralkohole oder Polyalkylenoxidpolyetheramine. Insbesondere sind die Uretdiongruppen aufweisenden Härter (All) bevorzugt frei von Polyethylenoxidpolyether oder gemischten Polyalkylenoxidpolyether, deren Alkylenoxideinheiten zu mindestens 30 Mol-% aus Ethylenoxideinheiten bestehen.

Bevorzugte Uretdiongruppen aufweisende Härter (A11) haben einen freien NCO-Gehalt von weniger als 5 Gew.- % und einen Gehalt an Uretdiongruppen von 1 bis 18 Gew.- % (berechnet als C₂N₂O₂, Molekulargewicht 84 g/mol). Außer den Uretdiongruppen können die Härter A (11) auch Isocyanurat-, Biuret-, Allophanat-, Urethan- und/oder Harnstoff-Strukturen aufweisen.

Geeignete Polyole (B12) können aus Polyesterpolyolen, Polyetherpolyolen, Polyurethanetherpolyolen, Polyurethanesterpolyolen, Polycaprolactonopolyole, Polyetheresterpolyole, Polycarbonatpolyolen, Poly(metha)acrylatpolyolen, C₂₋₁₀-Kohlenwasserstoff mit mindestens zwei Hydroxylgruppen oder Mischungen davon ausgewählt werden, so lange solche Polyole mindestens eine chemisch gebundene Carbonsäuregruppen aufweisen.
Als mindestens eine chemisch gebundene Carbonsäuregruppe aufweisenende Ausgangskomponente für die Polyole (B12) kommen solche Polyole, vorzugsweise Diole, infrage, die wenigstens eine Carbonsäuregruppe, im Allgemeinen 1 bis 3 Carbonsäuregruppen je Molekül enthalten. Beispiel hierfür sind Dihydroxycarbonsäuren, wie α,α-Dialkylolalkansäuren, insbesondere α, α Dimethylolalkansäuren, wie 2,2-Dimethylolessigsäure, 2,2-Dimethylolpropionsäure, 2,2-Dimethylolbuttersäure, 2,2-Dimethylolpentansäure, Dihydroxybernsteinsäure, weiterhin Polyhydroxysäuren, wie Glukonsäure, oder Aminocarbonsäuren, wie beispielsweise α,Ω-Diaminovaleriansäure, 2,4-Diamino-toluolsulfonsäure udgl. Es können auch Gemische der vorstehend beschriebenen Verbindungen zum Einsatz kommen.

Als mindestens eine chemisch gebundene Carbonsäuregruppe aufweisenende Ausgangskomponente für die Polyole (B12) besonders bevorzugt ist 2,2-Dimethylolpropionsäure. Weniger bevorzugt können auch monohydroxyfunktionelle Verbindungen, die wenigstens eine Carbonsäuregruppe aufweisen, wie z.B Hydroxypivalinsäure oder Hydroxydecansäure eingesetzt werden.

Für die Polyole (B12) ausgewählt aus Poly(metha)acrylatpolyolen kommen Copolymerisate infrage, die Monomer-Einheiten mit Carbonsäure- oder Carbonsäureanhydrid-Gruppen enthalten, wie z.B. Acrylsäure, Methacrylsäure, β-Carboxyethylacrylat, Crotonsäure, Fumarsäure, Maleinsäure(anhydrid), Itaconsäure oder Monoalkylester zweibasiger Säuren bzw. Anhydride wie z.B. Maleinsäuremonoalkylester. Bevorzugt sind Acrylsäure oder Methacrylsäure Copolymerisate. Geeignete Polyole (B12) sind Polyole mit einem OH-Gehalt größer 1 Gew.-% (als OH-Gruppe auf Festgehalt berechnet, Molekulargewicht 17 g / mol) und mit zahlenmittleren Molgewichten Mn von 500 bis 20000 g/mol, bevorzugt von 500 bis 10000 g/mol, besonders bevorzugt von 500 bis 5000 g/mol.

Die Herstellung des erfindungsgemäß eingesetzten Polyurethanharzes erfolgt bevorzugt in der Weise, dass man eine nicht wässrige Harz-Vorstufe des Polyols (B12) mit mindestens einem uretdiongruppenhaltigen Härter (A11), basierend auf aliphatischen, (cyclo) aliphatischen, araliphatischen und/oder aromatischen Polyisocyanaten, welcher keine chemisch gebundene hydrophilisierende Gruppen enthält, in nicht-wässrigem System homogen vermischt. Anschließend werden die im Polyol (B12) vorhandenen Carbonsäuregruppen bevorzugt zu mindestens 50 %, stärker bevorzugt 80 % bis 120 %, besonders bevorzugt 95 bis 105 % mit geeigneten Neutralisationsmitteln (N) neutralisiert und anschließend mit entionisiertem Wasser dispergiert. Die Neutralisation kann vor, während oder nach dem Dispergierschritt erfolgen. Bevorzugt ist jedoch die Neutralisation vor der Wasserzugabe.

Geeignete Neutralisationsmittel (N) sind beispielsweise Triethylamin, Dimethylaminoethanol, Dimethylcyclohexylamin, Triethanolamin, Methyldiethanolamin, Diisopropanolamin, Ethyldiisopropylamin, Diisopropylcyclohexylamin, N-Methylmorpholin, 2-Amino-2-methyl-1-propanol, Ammoniak oder andere gebräuchliche Neutralisationsmittel oder deren Neutralisationsgemische.

Bevorzugt sind tert. Amine wie z.B. Triethylamin, Diisopropylhexylamin, besonders bevorzugt ist Dimethylethanolamin.

Als Lösemittel unter (C13) sind alle flüssigen Substanzen geeignet, die nicht mit anderen Inhaltstoffen reagieren. Bevorzugt sind Aceton, Methylethylketon, Ethylacetat, Butylacetat, Xylol, Solvesso 100, Solvesso 150, Propylenglykolmono-n-butylether (Dowanol PnB), Methoxypropylacetat und Dibasicester. Gegebenenfalls kann das eingesetzte Lösemittel anschließend destillativ entfernt werden.

Erfindungsgemäß können die in der Lack- bzw. Klebstofftechnologie üblichen Zusatzstoffe (D14), wie Verlaufsmittel, z. B. Polysilicone oder Acrylate, Lichtschutzmittel, z. B. sterisch gehinderte Amine, oder andere Hilfsmittel, wie sie z. B. in EP 0 669 353 beschrieben wurden, in einer Gesamtmenge von 0,05 bis 5 Gew. % enthalten sein. Füllstoffe und Pigmente wie zum Beispiel Titandioxid können in einer Menge bis zu 50 Gew.- % der Uretdiondispersion zugesetzt werden.

### Beispiele:

### Methoden und Materialien:

### Methoden:

Sofern nicht anders vermerkt, beziehen sich alle analytischen Methoden auf Messungen bei Temperaturen von 23 °C.

**Pendelhärte:** Die Pendelhärte wurde auf einer Glasplatte nach DIN EN ISO 1522:2007-04 gemessen und wird nach König bestimmt.

### Lösungsmittel- und Wasserbeständigkeit:

Die gehärteten Lacke wurden auf ihre Beständigkeit gegenüber Xylol, 1-Methoxy-2-propylacetat, Ethylacetat, Aceton und Wasser getestet. Ein mit der Prüfsubstanz getränktes Stück Watte wurde auf die Beschichtungsoberfläche gelegt und mit einem Uhrglas bedeckt. Nach der angegebenen Expositionszeit wurde die Watte entfernt, die exponierte Stelle wurde getrocknet und sofort untersucht. Die Auswertung der Erweichung oder Verfärbung der Beschichtungsoberfläche erfolgte nach DIN EN ISO 4628-1:2016-07.
0 unverändert, d.h. keine wahrnehmbare Veränderung
1 sehr leichte, d.h. nur sichtbare Veränderung, z.B. Spur einer Farbtonveränderung
2 feststellbare, d.h. deutlich erkennbare Veränderung, z.B. mit dem Fingernagel spürbare Erweichung
3 deutlich wahrnehmbare Veränderung, z.B. mittlere Farbtonveränderung, evtl. geringe Blasenbildung
4 starke Veränderung, z.B. starke Blasenbildung
5 Beschichtung komplett zerstört ohne Fremdeinwirkung

### IR-Messung:

Die Uretdionringöffnung wurde durch ein FT-IR-Spektrometer (Tensor II mit Platin-ATR-Einheit (Diamantkristall) von Bruker charakterisiert. Die Spektren wurden in einem Wellenzahlbereich von (4000-400) cm⁻¹ aufgezeichnet. Das Maximum des Uretdionpeaks (etwa 1760 cm⁻¹) wurde ausgewertet. Peak-Höhen zu Vergleichssystemen wurden mit einem auf 100% eingestellten Anfangswert verglichen (Uretdion-Film ohne Katalysator, bei Raumtemperatur getrocknet). Die Uretdion-Peakhöhe der Filme, die für 30 min bei 180 °C gehärtet wurden, wurde auf 0% eingestellt. Variationen wurden relativ zu diesen 100 und 0%-Werten bestimmt (Verhältnisbildung).

Bei der Messung auf einem ATR-Kristall hängt die Intensität des Spektrums von der Besetzung der Kristalloberfläche ab. Da bei vergleichbaren Messungen durch die Probenvorbereitung eine vergleichbare Deckung der Kristalloberfläche nicht gewährleistet werden kann, muss eine Korrektur dieses Effektes für die Verhältnisbildung durch Normalisierung aller Spektren auf der Spitze der CH-Streckschwingung (Wellenzahlbereich) erfolgen (3000-2800 cm⁻¹) Bei der oben beschriebenen Auswertung der Peakhöhen wird zusätzlich eine Basiskorrektur der Spektren durchgeführt.

**Der Feststoffgehalt** (nicht flüchtiger Inhalt) wurde durch Erhitzen einer gewogenen Probe bei 125 °C bis zur Gewichtskonstanz bestimmt. Bei konstantem Gewicht wird der Festkörpergehalt durch Zurückwiegen der Probe berechnet.

**Der NCO-Gehalt** wurde volumetrisch nach DIN-EN ISO 11909 bestimmt. Die Kontrolle an freien NCO-Gruppen erfolgte mittels IR-Spektroskopie (Bande bei 2260 cm⁻¹).

**Die angegebenen Viskositäten** wurden mittels Rotationsviskosimetrie nach DIN 53019:2016-10 bei 23 °C mit einem Rotationsviskosimeter mit einer Schergeschwindigkeit von 40 1/s, Anton Paar Germany GmbH, Ostfildern, Deutschland, bestimmt.

**Die mittlere Teilchengrößen** (der Zahlenmittel angegeben) der Polyurethan-Dispersionen wurden nach Verdünnung mit deionisiertem Wasser mittels Laserkorrelationsspektroskopie bestimmt (Instrument: Malvern Zetasizer 1000, Malver Inst. Limited, London, UK).

**Das Zetapotential** wurde durch Verdünnen eines Tropfens der Probe mit 20 mL demineralisiertem Wasser gemessen und durch Rühren homogenisiert. Anschließend wurde das Zetapotential bei 23 °C im Malvern Nanosizer ZS90 (Malvern Instruments, Herrenberg, Deutschland) bestimmt.

**Die Säurezahl** der jeweiligen Dispersion wurde nach DIN EN ISO 2114: 2002-06 bestimmt. Anstelle einer Mischung aus Toluol und Ethanol - wie in DIN EN ISO 2114: 2002-06 beschrieben - wurde als Lösungsmittel ein Gemisch aus Aceton und Ethanol (2: 1, bezogen auf das Gewicht) verwendet. Die Einheit der Säurezahl ist mg KOH pro g der analysierten Probe.

### Materialien:

Lupragen N 700 (1,8-Diazabicyclo-5,4,0-undecene-7 (DBU)): Fa. BASF SE
Na-1,2,4-Triazolat: Fa. Sigma-Aldrich
Heloxy Modifier TP: Polyfunktionaler Glycidylether von Trimethylolpropan, Fa. Hexion
Bayhydrol A2695: wasserverdünnbare, OH-funktionelle Polyacrylatdispersion; ca. 41%ig in Wasser/1-Butoxy-2-propanol, neutralisiert mit Triethanolamin/Dimethylethanolamin, 7,2 % 1-Butoxy-2-propanol, Fa. Covestro
Dowanol PnB: Propylenglykol Mono-n-Butylether, Fa. Dow
Peroxan DB: Di-tert-butylperoxid: Fa. Pergan
Solvent Naphtha 100: ein aromatisches Lösemittel, Fa. Azelis
Butylglykol: Fa. Brenntag
Dimethylolpropionsäure (DMPS): Fa. Perstorp
Addocat SO: Zinn (II) 2-Ethylhexanoat, Fa. Rhein Chemie,
Alle Acrylat-Monomere sowie Amine (Fa. Sigma - Aldrich) wurden wie geliefert eingesetzt
Veova 9: Versaticsäurevinylester, Fa. Momentive
Andere Lösungsmittel und Chemikalien: Sigma-Aldrich
Xylol (Xy); 1-Methoxy-2-propylacetat (MPA); Ethylacetat (EA); Aceton (Ac)

### Beispiele Polymersynthese:

### Herstellungsbeispiel 1

### Herstellung eines Uretdionpolyisocyanates auf Basis von Isophorondiisocyanat

1000 g (4,50 mol) Isophorondiisocyanat (IPDI) wurden bei Raumtemperatur unter trockenem Stickstoff und Rühren nacheinander mit 10 g (1 %) Triisodecylphosphit sowie 20 g (2 %) 4-Dimethylaminopyridin (DMAP) als Katalysator versetzt. Nach 20 h wurde die Reaktionsmischung, die einen NCO-Gehalt von 28,7 %, entsprechend einem Oligomerisierungsgrad von 21,8 % aufwies, ohne vorherige Zugabe eines Katalysatorgiftes mit Hilfe eines Dünnschichtverdampfers bei einer Temperatur von 160°C und einem Druck von 0,3 mbar von flüchtigen Bestandteilen befreit.

Man erhielt ein hellgelbes Uretdionpolyisocyanat mit einem Gehalt an freien NCO-Gruppen von 17,0 %, einem Gehalt an monomerem IPDI von 0,4 % und einer Viskosität (nach DIN EN ISO 3219:1994-10) von mehr als 200.000 mPas (23°C).

### Herstellung eines wasseremulgierbaren, Uretdiongruppen enthaltenden Vernetzers

247 g (1,00 val) des vorstehend beschriebenen uretdiongruppenhaltigen Polyisocyanates auf Basis von IPDI mit einem Gehalt an freien Isocyanatgruppen von 17,0 % und einem rechnerisch bestimmten Gehalt an Uretdiongruppen von 20,8 % wurden in 370,3 g 1-Methoxy-2-propylacetat vorgelegt, mit 0,2 g Dibutylzinndilaurat (DBTL) als Katalysator versetzt und unter trockenem Stickstoff auf 80°C erwärmt. Anschließend gab man innerhalb von 30 Minuten eine Mischung von 40,6 g (0,90 val) 1,4-Butandiol und 82,5 g (0,11 val) Methoxypolyethylenglygol 750 zu und rührte bei einer Reaktionstemperatur von max. 105°C, bis der NCO-Gehalt des Reaktionsgemisches nach ca. 6 h auf einen Wert von unter 0,1 % abgesunken war. Es lag eine schwach gelb gefärbte Lösung eines Uretdiongruppen enthaltenden Vernetzers mit folgenden Kenndaten vor:
NCO-Gehalt: < 0,1 %
Uretdiongruppen-Gehalt (ber.): 6,9 %
monomeres IPDI: 0,09 %
Festkörpergehalt: 50 %

### Herstellungsbeispiel 1a

337 g 1,4-Butandiol, 108 g 2-Ethylhexanol und 569 g e-Caprolacton wurden bei Raumtemperatur unter trockenem Stickstoff vermischt, mit 0,3 g Zinn(II)-octoat versetzt, 5 h bei 160°C gerührt und anschließend auf Raumtemperatur abgekühlt. Zu dieser Mischung wurden
dann 1850 g uretdiongruppenhaltigen Polyisocyanates auf Basis von IPDI mit einem Gehalt an freien Isocyanatgruppen von 17,0 % und einem rechnerisch bestimmten Gehalt an Uretdiongruppen von 20,8 % aus dem Herstellungsbeispiel 1, erwärmt auf 80°C innerhalb von 30 min zugegeben. Das Reaktionsgemisch wurde bei einer Temperatur von max. 100°C gerührt bis der NCO-Gehalt des Reaktionsgemisches nach 7 bis 8 h auf einen Wert von 0,8% abgesunken ist. Anschließend wurden zu dem Reaktionsgemisch 1910 g Dowanol PnB zugegeben und die Lösung wurde auf Raumtemperatur abgekühlt.

### Herstellungsbeispiel 2:

### Herstellung einer anionischen Uretdion-Prepolymer-Dispersion:

218,5 g IPDI-Dimer aus Herstellungsbeispiel 1 wurden in 850 g Aceton bei 50 °C in einer Standardrührvorrichtung gelöst. 22,9 g Dimethylolpropionsäure, 265,9 g eines OH-funktionellen Polyesters auf Basis von Adipinsäure, Isopthalsäure, 1,2-Propylenglykol, Neopentylglykol, Trimethylolpropan (OH-Zahl: 181 mg/g) und 63 g Zinnneodecanoat wurden zugegeben und die Mischung unter atmosphärischem Druck unter Rückfluss gerührt bis der NCO-Gehalt unter 0,5% sank. Dann wurden 16,8 g N, N-Dimethylaminoethanol und 927 g Wasser zugegeben. Das Aceton wurde durch Destillation im Vakuum entfernt, die Viskosität wurde durch Zugabe von Wasser eingestellt.
Die resultierende weiße Dispersion hatte folgende Eigenschaften:
Festkörpergehalt: 37,6%
Mittlere Teilchengröße: 91 nm
Viskosität: 31 mPas
Säurezahl: 7,3 mg KOH/g (bezogen auf die Dispersion)
Zetapotential: 49,6 mV

### Herstellungsbeispiele 3a-d:

### Herstellungsbeispiel 3a

**Tabelle 1.**

| | | Einwaage (g) |
|---|---|---|
| Teil 1 | DOWANOL PnB | 1567 |
| | | |
| Teil 2 | PEROXAN DB | 33 |
| | DOWANOL PnB | 33 |
| | | |
| Teil 3 | METHYLMETHACRYLAT | 1243 |
| | HYDROXYETHYLMETHACRYLAT | 2419 |
| | n-BUTYLMETHACRYLAT | 592 |
| | n-BUTYLACRYLAT | 723 |
| | ISOBORNYLMETHACRYLAT | 1701 |
| | BUTANDIOLMONOACRYLAT | 836 |
| | STYROL | 573 |
| | | |
| Teil 4 | PEROXAN DB | 140 |
| | DOWANOL PnB | 140 |
| | | |
| Teil 5 | BUTANDIOLMONOACRYLAT | 296 |
| | METHYLMETHACRYLAT | 449 |
| | HYDROXYETHYLMETHACRYLAT | 467 |
| | n-BUTYLACRYLAT | 379 |
| | ACRYLSÄURE | 316 |
| | | |
| Teil 6 | PEROXAN DB | 33 |
| | DOWANOL PnB | 60 |
| | | |
| | Gesamtmenge | 12000 |

Teil 1 aus der Tabelle 1 wurde in eine Rührapparatur unter Stickstoff eingewogen und auf 138 °C aufheizt. Danach wurde Teil 2 bei 138 °C in 20 Min. gleichmäßig zudosiert. Anschließend wurde sofort Teil 3 und Teil 4 parallel in 4 Std. 30 Min. bei 138 °C gleichmäßig zudosiert. Nach der Zugabe wurde das Reaktionsgemisch 30 Min. bei 138 °C gehalten. Zum Schluss wurden Teil 5 und Teil 6 parallel in 1 Std. 30 Min. bei 138 °C gleichmäßig zudosiert. Nach der Zugabe wurde das Reaktionsgemisch erneut 1 Std. bei 138 °C gehalten. Nach dem Abkühlen auf 100°C wurde das Reaktionsgemisch abgefüllt. Man erhielt eine leicht gelbliche, hoch viskose Polyacrylat-Lösung. 500g dieser Lösung wurden in eine Rührapparatur unter Stickstoff eingewogen und auf 70 °C aufheizt. Nach der Homogenisierung wurden 567g der Lösung aus dem Herstellungsbeispiel 1a zugegeben und die Mischung wurde wieder 30 Min. bei 70°C homogenisiert, gefolgt von Zugabe einer Mischung aus 21,5g Triethanolamin und 4,3g Dimethylethanolamin. Nach einer Nachrührzeit von 30 Min. bei 70°C wurden in die Mischung 463g destilliertes Wasser eingerührt. Nach der Feineinstellung der Viskosität auf ca. 2000 mPas erhielt man eine Dispersion mit folgenden Kenndaten:
Festgehalt: 43,7 Gew%
Säurezahl (100%ig): 13mg KOH/g
OH-Gehalt (100%ig, berechnet): 2,8 Gew%
Mittlere Teilchengröße: 230 nm
Viskosität: 2030 mPas

### Herstellungsbeispiel 3b

500g Polyacrylat Lösung aus dem Herstellungsbeispiel 1 wurden in eine Rührapparatur unter Stickstoff eingewogen und auf 70 °C aufheizt. Nach der Homogenisierung wurden 283g der Lösung aus dem Herstellungsbeispiel 1a zugegeben und die Mischung wurde wieder 30 Min. bei 70°C homogenisiert, gefolgt von Zugabe einer Mischung aus 21,5g Triethanolamin und 4,3g Dimethylethanolamin. Nach einer Nachrührzeit von 30 Min. bei 70°C wurden in die Mischung 407g destilliertes Wasser eingerührt. Nach der Feineinstellung der Viskosität auf ca. 2000 mPas erhielt man eine Dispersion mit folgenden Kenndaten:
Festgehalt: 41,7 Gew%
Säurezahl (100%ig): 16,6 mg KOH/g
OH-Gehalt (100%ig, berechnet): 3,6 Gew%
Mittlere Teilchengröße: 175 nm
Viskosität: 2360 mPas

### Herstellungsbeispiel 3c

**Tabelle 2.**

| | | Einwaage (g) |
|---|---|---|
| Teil 1 | SOLVENT NAPHTA 100 | 900 |
| | BUTYLGLYKOL | 648 |
| | | |
| Teil 2 | PEROXAN DB | 33 |
| | BUTYLGLYKOL | 33 |
| | | |
| Teil 3 | METHYLMETHACRYLAT | 3669 |
| | HYDROXYETHYLMETHACRYLAT | 1816 |
| | n-BUTYLACRYLAT | 2603 |
| | | |
| Teil 4 | PEROXAN DB | 139 |
| | BUTYLGLYKOL | 139 |
| | | |
| Teil 5 | METHYLMETHACRYLAT | 520 |
| | HYDROXYETHYLMETHACRYLAT | 734 |
| | n-BUTYLACRYLAT | 408 |
| | ACRYLSÄURE | 245 |
| | | |
| Teil 6 | PEROXAN DB | 33 |
| | BUTYLGLYKOL | 80 |
| | Gesamtmenge | 12000 |

Teil 1 aus der Tabelle 2 wurde in eine Rührapparatur unter Stickstoff eingewogen und auf 138 °C aufheizt. Danach wurde Teil 2 bei 138 °C in 20 Min. gleichmäßig zudosiert. Anschließend wurde sofort Teil 3 und Teil 4 parallel in 4 Std. 30 Min. bei 138 °C gleichmäßig zudosiert. Nach der Zugabe wurde das Reaktionsgemisch 30 Min. bei 138 °C gehalten. Zum Schluss wurden Teil 5 und Teil 6 parallel in 1 Std. 30 Min. bei 138 °C gleichmäßig zudosiert. Nach der Zugabe wurde das Reaktionsgemisch erneut 1 Std. bei 138 °C gehalten. Nach dem Abkühlen auf 110°C wurde das Reaktionsgemisch abgefüllt. Man erhielt eine leicht gelbliche, hoch viskose Polyacrylat-Lösung. 552g dieser Lösung wurden in eine Rührapparatur unter Stickstoff eingewogen und auf 70 °C aufheizt. Nach der Homogenisierung wurden 471g der Lösung aus dem Herstellungsbeispiel 1a zugegeben und die Mischung wurde wieder 30 Min. bei 70°C homogenisiert, gefolgt von Zugabe von 14,6g Dimethylethanolamin. Nach einer Nachrührzeit von 30 Min. bei 70°C wurden in die Mischung 466g destilliertes Wasser eingerührt. Nach der Feineinstellung der Viskosität auf ca. 2000 mPas erhielt man eine Dispersion mit folgenden Kenndaten:
Festgehalt: 46,1 Gew%
Säurezahl (100%ig): 16,3mg KOH/g
OH-Gehalt (100%ig, berechnet): 2,1 Gew%
Mittlere Teilchengröße: 225 nm
Viskosität: 1110 mPas

### Herstellungsbeispiel 3d

**Tabelle 3.**

| | | Einwaage (g) |
|---|---|---|
| Teil 1 | DOWANOL PnB | 3438 |
| | | |
| Teil 2 | PEROXAN DB | 33 |
| | DOWANOL PnB | 33 |
| | | |
| Teil 3 | STYROL | 570 |
| | METHYLMETHACRYLAT | 1566 |
| | HYDROXYETHYLMETHACRYLAT | 1601 |
| | n-BUTYLACRYLAT | 341 |
| | ISOBORNYLMETHACRYLAT | 1520 |
| | n-BUTYLMETHACRYLAT | 1208 |
| | VEOVA 9 | 1251 |
| | | |
| Teil 4 | PEROXAN DB | 118 |
| | DOWANOL PnB | 321 |
| | | |
| | Gesamtmenge | 12000 |

Teil 1 aus der Tabelle 3 wurde in eine Rührapparatur unter Stickstoff eingewogen und auf 148 °C aufheizt. Danach wurde Teil 2 bei 128 °C in 20 Min. gleichmäßig zudosiert. Anschließend wurde sofort Teil 3 und Teil 4 parallel in 6 Std. bei 148 °C gleichmäßig zudosiert. Nach der Zugabe wurde das Reaktionsgemisch 60 Min. bei 148 °C gehalten. Nach der Zugabe wurde das Reaktionsgemisch erneut 1 Std. bei 148 °C gehalten. Nach dem Abkühlen auf 80°C wurde die Polyacrylat-Lösung abgefüllt.

**Tabelle 4.**

| | Rohstoff | Einwaagen |
|---|---|---|
| Teil 1: | Polyacrylat -Lösung aus der Tabelle 3 | 1993 |
| | | |
| Teil 2 | PEROXAN DB | 36 |
| | DOWANOL PnB | 36 |
| | | 72 |
| Teil 3 | 2 - ETHYLHEXYLACRYLAT | 377 |
| | HYDROXYETHYLACRYLAT | 1931 |
| | n-BUTYLMETHACRYLAT | 1308 |
| | ISOBORNYLMETHACRYLA T | 2951 |
| | n-BUTYLACRYLAT | 338 |
| | BUT ANDIOLMONOACRYLA T | 555 |
| | | |
| Teil 4 | PEROXAN DB | 129 |
| | DOWANOL PnB | 154 |
| | | |
| Teil 5 | METHYLMETHACRYLAT | 533 |
| | HYDROXYETHYLACRYLAT | 799 |
| | n-BUTYLACRYLAT | 411 |
| | METHACRYLSÄURE | 333 |
| Teil 6 | PEROXAN DB | 36 |
| | DOWANOL PnB | 80 |
| | | |
| | Gesamtmenge | 12000 |

Teil 1 aus der Tabelle 4 wurde in eine Rührapparatur unter Stickstoff eingewogen und auf 144 °C aufheizt. Danach wurde Teil 2 bei 144 °C in 20 Min. gleichmäßig zudosiert. Anschließend wurde sofort Teil 3 und Teil 4 parallel in 4 Std. 30 Min. bei 144 °C gleichmäßig zudosiert. Nach der Zugabe wurde das Reaktionsgemisch 5 Min. bei 144 °C gehalten. Zum Schluss wurden Teil 5 und Teil 6 parallel in 1 Std. 30 Min. bei 144 °C gleichmäßig zudosiert. Nach der Zugabe wurde das Reaktionsgemisch erneut 1 Std. bei 144 °C gehalten. Nach dem Abkühlen auf 100°C wurde das Reaktionsgemisch abgefüllt. Man erhielt eine leicht gelbliche, hoch viskose Polyacrylat-Lösung. 304g dieser Lösung wurden in eine Rührapparatur unter Stickstoff eingewogen und auf 70 °C aufheizt. Nach der Homogenisierung wurden dazu 385g der Lösung aus dem Herstellungsbeispiel 1a zugegeben und die Mischung wurde wieder 30 Min. bei 70°C homogenisiert, gefolgt von Zugabe von 11g Dimethylethanolamin. Nach einer Nachrührzeit von 30 Min. bei 70°C wurden in die Mischung 324g destilliertes Wasser eingerührt. Nach der Feineinstellung der Viskosität auf ca. 2000 mPas erhielt man eine Dispersion mit folgenden Kenndaten:
Festgehalt: 42,6 Gew%
Säurezahl (100%ig): 18 mg KOH/g
OH-Gehalt (100%ig, berechnet): 2,5 Gew%
Mittlere Teilchengröße: 287 nm
Viskosität: 2030 mPas

### Lackprüfungen:

### Lackprüfungen von Beispieldispersion 1 aus Herstellungsbeispiel 1:

Klarlacke wurden aus der folgenden Zusammensetzung hergestellt:
Die Uretdion-Dispersion von Herstellungsbeispiel 1 wurde in Wasser dispergiert und dann in einem Speed-Mixer (2000 U/min) mit Bayhydrol A2695 gemischt. Heloxy Modifier TP wurde zugegeben, dann wurden 1,2,4-Na-Triazolat (10% in Wasser) und DBU (10% in Wasser, frisch vermischt). Die Mischung wurde wieder mit einem Geschwindigkeitsmischer (2000 U/min) vermischt und auf dem Labortisch für 30 min zur Schaumreduzierung stehengelassen.
Die Mischung wurde auf Glas oder einer normierten Coil-Prüftafel (Coil Coating schwarz - CS 200570, Fa. Heinz Zanders Prüf-Blech-Logistik) mit einem Beschichtungsrakel mit einer Schichtdicke von 150-180 µm (nass) aufgetragen. Die Platten wurden bei Raumtemperatur für 5 Minuten getrocknet und dann bei 100 °C für 30 Minuten im Ofen eingebrannt. Die erhaltenen Filme wurden anwendungstechnisch bewertet und ein IR-Spektrum wurde aufgenommen.

**Beispiel 4: Formulierungen und Vergleichsformulierungen mit Beispieldispersion 1**

| | FG(%) | V1 | V2 | V3 | V4 | V5 | V6 | V7 | V8 | V9 | V10 | 11 |
|---|---|---|---|---|---|---|---|---|---|---|---|---|
| Bayhydrol A 2695 | 42,90 | 20,0 | 20 | | 20,0 | 20,0 | 20,0 | 20,0 | 20,0 | 20,0 | 20,0 | 20,0 |
| Dispersion Herstellungsbeispiel 1 in MPA | 50,00 | | | 28,5 | 28,5 | 28,5 | 28,5 | 28,5 | 28,5 | 28,5 | 28,5 | 28,5 |
| VE-Wasser | | | 10 | 34,4 | 34,4 | 34,4 | 34,4 | 34,4 | 34,4 | 34,4 | 34,4 | 34,4 |
| Heloxy modifier TP | 100,00 | | 0,49 | | | | | 0,49 | | 0,49 | 0,49 | 0,49 |
| 1,2,4-Triazol-Na in Wasser | 10,00 | | | | | 2,30 | | | 2,30 | 2,30 | | 2,30 |
| Lupragen N700 (DBU) in Wasser | 10,00 | | | | | | 2,30 | | 2,30 | | 2,30 | 2,30 |

| | | | | | | | | | | | | |
|---|---|---|---|---|---|---|---|---|---|---|---|---|
| V = Vergleichsbeispiel, nicht erfindungsgemäß FG = Feststoffgehalt in % | | | | | | | | | | | | |

**Anwendungstechnische Prüfungen/Physikalische Eigenschaften der Lacke aus Beispiel 4:**

| | | V1 | V2 | V3 | V4 | V5 | V6 | V7 | V8 | V9 | V10 | 11 |
|---|---|---|---|---|---|---|---|---|---|---|---|---|
| Ringöffnung¹ | | - | - | >97 | >97 | >97 | >97 | >97 | 12 | >94 | 94 | <4 |
| Pendelhärte nach König (Sec.) | | 98 | 110 | 128 | 170 | 189 | 181 | 156 | 198 | 181 | 171 | 195 |
| Beständigkeiten² | 0-5 | 5/5/5 /5 | 5/5/5 /5 | 5/5/5 /5 | 5/5/5 /5 | 5/5/5 /5 | 5/5/ 5/5 | 5/5/5 /5 | 1/1/ 2/2 | 3/3/4 /5 | 3/3/3 /3 | 0/0/ 0/1 |
| Beständigkeiten³ | 0-5 | 4-5 | 4-5 | 4 | 4 | 4 | 4 | 4 | 4 | 4 | 4 | 1-2 |

| | | | | | | | | | | | | |
|---|---|---|---|---|---|---|---|---|---|---|---|---|
| V = Vergleichsbeispiel, nicht erfindungsgemäß Härtungsbedingungen sofern nicht explizit anders angegeben 30 min bei 100°C ¹ = Uretdion IR-Intensität des Peaks mit Peakmax. Zwischen 1750 und 1800 cm⁻¹ in % ² = gegen Xy/MPA/EA/Ac auf Blech für 5 Minuten ³ = gegen Wasser, auf Glas für 1 Stunde | | | | | | | | | | | | |

### Lackprüfungen von Beispieldispersion 2:

Klarlacke wurden aus der folgenden Zusammensetzung hergestellt:
Zu der Uretdion-Dispersion aus Herstellungsbeispiel 2 wurden Heloxy Modifier TP, 1,2,4-Na-Triazolat (10% in Wasser) und DBU (10% in Wasser, frisch vermischt) zugegeben und die resultierende Mischung wurde in einem Speed-Mixer (2000 U/min) gemischt und anschließend für 30 min zur Schaumreduzierung stehengelassen.
Das Gemisch wurde auf Glas oder Blech mit einem Beschichtungsrakel mit einer Schichtdicke von 150-180 µm (nass) aufgetragen. Die Platten wurden bei Raumtemperatur für 5 Minuten getrocknet und dann bei 100 °C für 30 Minuten eingebrannt. Die erhaltenen Lacke wurden anwendungstechnisch bewertet und ein IR-Spektrum wurde aufgezeichnet.

**Beispiel 5: Vergleichsversuche und Versuche mit Formulierungen mit Beispieldispersion 2:**

| | FG | V1 | V2 | V3 | V4 | V5 | V6 | V7 |
|---|---|---|---|---|---|---|---|---|
| Dispersion aus Herstellungsbeispiel 2 | 31,00% | 20,00 | 20,00 | 20,00 | 20,00 | 20,00 | 20,00 | 20,00 |
| Na-Triazol in Wasser | 10,00% | | 1,20 | | | 1,20 | | 1,20 |
| DBU in Wasser | 10,00% | | | 0,62 | | 0,62 | 0,62 | 0,62 |
| Heloxy Modifier TP | | | | | 0,38 | | 0,38 | 0,38 |

| | | | | | | | | |
|---|---|---|---|---|---|---|---|---|
| V = Vergleichsbeispiel, nicht erfindungsgemäß FG = Feststoffgehalt (%) | | | | | | | | |

**Anwendungstechnische Prüfungen/Physikalische Eigenschaften der Lacke aus Beispiel 5:**

| | | **V1** | **V2** | **V3** | **V4** | **V5** | **V6** | **V7** |
|---|---|---|---|---|---|---|---|---|
| Ringöffnung¹ | | >97 | >97 | >97 | 87 | 80 | 31 | <3 |
| Pendelhärte, nach König (Sec.) | | 216 | 215 | 217 | 198 | 213 | 220 | 226 |
| Beständigkeiten² | 0-5 | 5/5/5/5 | 5/5/5/5 | 5/5/5/5 | 3/3/4/4 | 5/5/5/5 | 1-2/3/3-4 | 1/1/2/4 |
| Beständigkeiten³ | 0-5 | 0 | 1-2 | 1 | 1 | 1 | 0 | 0 |

| | | | | | | | | |
|---|---|---|---|---|---|---|---|---|
| V = Vergleichsbeispiel, nicht erfindungsgemäß Härtungsbedingungen sofern nicht explizit anders angegeben 30 min bei 100°C ¹ = Uretdion IR-Intensität des Peaks mit Peakmax. Zwischen 1750 und 1800 cm⁻¹ in % ² = gegen Xy/MPA/EA/Ac auf Blech für 5 Minuten ³ = gegen Wasser, auf Glas für 1 Stunde | | | | | | | | |

### Lackprüfungen von Dispersionen von Herstellungsbeispielen 3a-d:

Klarlacke wurden aus der folgenden Zusammensetzung hergestellt:
Die Uretdion-Dispersion aus Herstellungsbeispielen 3a-d wurde in einem Speed-Mixer (2000 U/min) mit der Uretdion-Dispersion aus Herstellungsbeispiel 1, Heloxy Modifier TP, 1,2,4-Na-Triazolat (10% in Wasser) und DBU (10% in Wasser, frisch vermischt). Die Mischung wurde für 30 min zur Schaumreduzierung stehengelassen.
Die Mischung wurde auf Glas oder Blech mit einem Beschichtungsrakel mit einer Schichtdicke von 150- 180 µm (nass) aufgetragen. Die Platten wurden bei Raumtemperatur für 5 Minuten getrocknet und dann bei 100 °C für 30 Minuten eingebrannt. Die erhaltenen Lacke wurden nach anwendungstechnisch bewertet und ein IR-Spektrum aufgezeichnet.

**Beispiel 6: Vergleichsversuche und Versuche mit Formulierungen aus Herstellungsbeispiel 3a-d:**

| | FG | V1 | V2 | V3 | V4 | V5 | V6 | V7 | V8 | 9 | 10 | 11 | 12 | 13 | 14 | 15 | 16 |
|---|---|---|---|---|---|---|---|---|---|---|---|---|---|---|---|---|---|
| **3a** | 41,7% | 10,0 | | | | 30,0 | | | | 20,0 | | | | 30,0 | | | |
| **3b** | 43,7% | | 10,0 | | | | 30,0 | | | | 20,0 | | | | 30,0 | | |
| **3c** | 46,1% | | | 10,0 | | | | 30,0 | | | | 20,0 | | | | 30,0 | |
| **3d** | 42,6% | | | | 10,0 | | | | 30,0 | | | | 20,0 | | | | 30,0 |
| **1** | 50,0% | | | | | 31,3 | 25,5 | 20,2 | 22,2 | | | | | 31,3 | 25,5 | 20,2 | 22,2 |
| VE-Wasser | | | | | | 36,0 | 32,0 | 25,0 | 30,0 | 2,0 | 2,0 | 2,00 | 2,00 | 34,00 | 33,00 | 28,00 | 29,00 |
| Heloxy modifier TP | 100,0 % | | | | | | | | | 0,36 | 0,30 | 0,39 | 0,40 | 0,54 | 0,45 | 0,59 | 0,60 |
| 1,2,4-Triazol-Na in Wasser | 10,0% | | | | | | | | | 0,83 | 0,87 | 0,92 | 0,85 | 2,80 | 2,60 | 2,30 | 2,50 |
| Lupragen N700 (DBU) in Wasser | 10,0% | | | | | | | | | 0,83 | 0,87 | 0,92 | 0,85 | 2,80 | 2,60 | 2,30 | 2,50 |
| Vernetzungsverhältnis | | 0,22 | 0,44 | 0,5 | 0,5 | 1,0 | 1,0 | 1,0 | 1,0 | 0,22 | 0,44 | 0,5 | 0,5 | 1,0 | 1,0 | 1,0 | 1,0 |

| | | | | | | | | | | | | | | | | | |
|---|---|---|---|---|---|---|---|---|---|---|---|---|---|---|---|---|---|
| V = Vergleichsbeispiele FG = Feststoffgehalt (%) | | | | | | | | | | | | | | | | | |

**Anwendungstechnische Prüfungen/Physikalische Eigenschaften der Lacke aus Beispiel 6:**

| | | V1 | V2 | V3 | V4 | V5 | V6 | V7 | V8 |
|---|---|---|---|---|---|---|---|---|---|
| Ringöffnung¹ | | >97 | >97 | >97 | >97 | >97 | >97 | >97 | 93 |
| Pendelhärte, nach König (Sec.) | | 61 | 93 | 55 | 80 | 131 | 152 | 114 | 129 |
| Beständigkeiten² | 0-5 | 5/5/5 /5 | 5/5/5/5 | 5/5/5/5 | 5/5/5/5 | 5/5/5/5 | 5/5/5/5 | 5/5/5/5 | 5/5/5/5 |
| Beständigkeiten³ | 0-5 | 4 | 4 | 3 | 3 | 2 | 2 | 1 | 1 |

| | | | | | | | | | |
|---|---|---|---|---|---|---|---|---|---|
| V = Vergleichsbeispiel, nicht erfindungsgemäß Härtungsbedingungen sofern nicht explizit anders angegeben 30 min bei 100°C ¹ = Uretdion IR-Intensität des Peaks mit Peakmax. Zwischen 1750 und 1800 cm⁻¹ in % ² = gegen Xy/MPA/EA/Ac auf Blech für 5 Minuten ³ = gegen Wasser, auf Glas für 1 Stunde | | | | | | | | | |

| | | 9 | 10 | 11 | 12 | 13 | 14 | 15 | 16 |
|---|---|---|---|---|---|---|---|---|---|
| Ringöffnung¹ | | <3 | <3 | <3 | <3 | <3 | <3 | <3 | <3 |
| Pendelhärte, nach König (Sec.) | | 126 | 97 | 115 | 155 | 167 | 194 | 189 | 189 |
| Beständigkeiten² | 0-5 | 3/4/4/5 | 2/3/3/4 | 2/4/4/4 | 3/4/4/4 | 1/1/1/1 | 0/0/1/1 | 0/1/1/4 | 0/0/2/4 |
| Beständigkeiten³ | 0-5 | 3-4 | 4 | 2 | 2 | 1 | 1-2 | 1-2 | 1 |

| | | | | | | | | | |
|---|---|---|---|---|---|---|---|---|---|
| V = Vergleichsbeispiel, nicht erfindungsgemäß Härtungsbedingungen sofern nicht explizit anders angegeben 30 min bei 100°C ¹ = Uretdion IR-Intensität des Peaks mit Peakmax. Zwischen 1750 und 1800 cm⁻¹ in % ² = gegen Xy/MPA/EA/Ac auf Blech für 5 Minuten ³ = gegen Wasser, auf Glas für 1 Stunde | | | | | | | | | |

Die Härtungsreaktion kann durch Beobachtung der Ringöffnung des Uretdions mittels der IR-Spektroskopie beobachtet werden. Mit der Kombination von Natriumtriazolat, DBU und Heloxy modifier TP ist der IR-Uretdion-Peak fast (<4% bezogen auf die Höhe des Uretdion-Peaks des getrockneten Ausgangsmaterials) verschwunden. Auch die Pendelhärte nimmt mit der Wirksamkeit der Katalysatormischung zu. Die Resistenz gegen Xylol, MPA, EA und Aceton soll mindestens 1/1/2/4 betragen, die Wasserbeständigkeit muss mindestens 1-2 betragen. Beide Beständigkeiten können nur durch die Katalysatormischung erhalten werden. Im Beispiel 6 kann man sehen, dass eine äquimolare Menge an Uretdion zu Alkohol (Einträge 13 bis 16) zu viel höheren Härten und besseren Beständigkeiten führt als ein Überschuss an Alkohol (Einträge 9 bis 12).

## Patentansprüche

1. Katalysatorsystem, umfassend
A) mindestens eine Verbindung ausgewählt aus Azolen, Oxazolen, Thiazolen, Benzotriazol, Benzimidazol, Benzoxazol und deren Salzen;
B) mindestens einen Säurefänger, der mindestens eine Epoxygruppe enthält; und
C) mindestens einen, eine N,N,N'-trisubstituierte Amidinstruktur enthaltenden, Katalysator mit einem Amidingruppengehalt von 12,0 bis 47,0 Gew.-%, berechnet als CN2 mit Molekulargewicht = 40.

2. Katalysatorsystem gemäß Anspruch 1, **dadurch gekennzeichnet, dass** die mindestens eine Verbindung A) ausgewählt ist aus Pyrazol, Imidazol, 1,2,3-Triazol, 1,2,4-Triazol und Benzotriazol und deren Salzen.

3. Katalysatorsystem gemäß Anspruch 1 oder 2, **dadurch gekennzeichnet, dass** der mindestens eine Säurefänger B) ausgewählt ist aus aliphatischen oder aromatischen Alkoholen, Diolen, Polyolen, Ethern und Säuren, welche mindestens eine Epoxygruppe enthalten.

4. Katalysatorsystem gemäß einem der vorstehenden Ansprüche, **dadurch gekennzeichnet, dass** der mindestens eine, eine N,N,N'-trisubstituierte Amidinstruktur enthaltende, Katalysator mit einem Amidingruppengehalt von 12,0 bis 47,0 Gew.-%, berechnet als CN2; Molekulargewicht = 40, C) ausgewählt wird aus gegebenenfalls substituierten Alkyl-, Aralkyl-, oder Alylreste tragende Amidinbasen, wobei die CN-Doppelbindung der Amidinstruktur sowohl Teil eines offenkettigen Moleküls als auch Bestandteil eines cyclischen oder bicyclischen Systems oder auch exocyclisch an einem Ringsystem angeordnet sein kann, oder beliebige Mischungen solcher Amidine.

5. Katalysatorsystem gemäß einem der vorstehenden Ansprüche, **dadurch gekennzeichnet, dass** A) zu B) in einem Masse-Verhältnis von 1:1 bis 10:1 vorliegt und/oder A) zu C) in einem Masse Verhältnis von 0,5:1 bis 5:1 vorliegt und/oder B) zu C) in einem Masse-Verhältnis von 1:1 bis 1:10 vorliegt.

6. Ein Kit, umfassend ein Katalysatorsystem gemäß einem der Ansprüche 1 bis 5 und davon getrennt eine wässrige Uretdiondispersion, die **dadurch gekennzeichnet ist, dass** sie eine Säurezahl von 1 bis 100 mg KOH/g und zudem mindestens eine Carboxylgruppe aufweist.

7. Kit gemäß Anspruch 6, **dadurch gekennzeichnet, dass** das Äquivalentverhältnis von Uretdion zu eingesetzten Hydroxygruppen 0,5:1 bis 1:0,5 beträgt.

8. Verfahren zur Herstellung einer Polyurethanschicht, umfassend die Schritte
i) Bereitstellen einer wässrigen Uretdiondispersion, die eine Säurezahl von 1 bis 100 mg KOH/g und mindestens eine Carboxylgruppe aufweist;
ii) Zugeben des Katalysatorsystems gemäß einem der Ansprüche 1 bis 5;
iii) Aufbringen der unter ii) erhaltenen Mischung auf ein Substrat;
iv) Trocknen der Mischung aus Schritt iii), und
v) Härten der Mischung aus Schritt iv) unter Wärmezufuhr bis 120°C für bis zu 180 Minuten.

9. Polyurethanschicht, insbesondere Polyurethanfilm, erhältlich durch ein Verfahren nach Anspruch 8.

10. Verwendung eines Katalysatorsystems gemäß einem der Ansprüche 1 bis 5 zum Aushärten von wässrigen Uretdiondispersionen, die eine Säurezahl von 1 bis 100 mg KOH/g und mindestens eine Carboxylgruppe aufweisen und/oder zur Herstellung von Lacken oder Beschichtungen, insbesondere Polyurethanfilmen.
